(19) Europäisches Patentamt
European Patent Office
Office européen des brevets

(11) EP 1 079 212 B1

(12) **EUROPÄISCHE PATENTSCHRIFT**

(45) Veröffentlichungstag und Bekanntmachung des Hinweises auf die Patenterteilung:
**25.01.2012   Patentblatt 2012/04**

(51) Int Cl.:
*G01F 1/58* *(2006.01)*

(21) Anmeldenummer: **00115431.9**

(22) Anmeldetag: **18.07.2000**

(54) **Magnetisch-induktives Durchflussmessverfahren**

Method for the magnetic-inductive measurement of fluid flow

Procédé pour la mesure magnéto-inductive d'un débit

(84) Benannte Vertragsstaaten:
**AT BE CH CY DE DK ES FI FR GB GR IE IT LI LU MC NL PT SE**

(30) Priorität: **16.08.1999   DE 19938160**

(43) Veröffentlichungstag der Anmeldung:
**28.02.2001   Patentblatt 2001/09**

(73) Patentinhaber: **KROHNE MESSTECHNIK GMBH & CO. KG**
**47058 Duisburg (DE)**

(72) Erfinder: **Brockhaus, Helmut, Dr.**
**46535 Dinslaken (DE)**

(74) Vertreter: **Gesthuysen, von Rohr & Eggert Patentanwälte**
**Postfach 10 13 54**
**45013 Essen (DE)**

(56) Entgegenhaltungen:
DE-A- 3 700 165    GB-A- 2 152 220
US-A- 4 210 022    US-A- 4 382 387
US-A- 5 625 155

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein magnetisch-induktives Durchflußmeßverfahren für strömende Medien, bei dem die Erregung der das Magnetfeld erzeugenden Feldspulen lückend erfolgt und die Meßzeiträume jeweils eine positive Halbperiode des Magnetfeldes und eine negative Halbperiode des Magnetfeldes umfassen.

Das grundlegende Prinzip eines magnetisch-induktiven Durchflußmeßgeräts für strömende Medien geht bereits auf Faraday zurück, der im Jahre 1832 vorgeschlagen hat, das Prinzip der elektrodynamischen Induktion zur Strömungsgeschwindigkeitsmessung anzuwenden. Nach dem Faradayschen Induktionsgesetz entsteht in einem strömenden Medium, welches Ladungsträger mit sich führt und durch ein Magnetfeld hindurch fließt, eine elektrische Feldstärke senkrecht zur Strömungsrichtung und zum Magnetfeld. Dieses Gesetz wird bei einem magnetisch-induktiven Durchflußmesser dadurch genutzt, daß ein Magnet, regelmäßig bestehend aus zwei Magnetspulen, ein Magnetfeld senkrecht zur Strömungsrichtung in dem Meßrohr erzeugt. Innerhalb dieses Magnetfelds liefert jedes sich durch das Magnetfeld bewegende Volumenelement des strömenden Mediums mit der in diesem Volumenelement entstehenden Feldstärke einen Beitrag zu der über die Meßelektroden abgegriffenen Meßspannung. Die Meßelektroden werden bei den bekannten magnetisch-induktiven Durchflußmeßgeräten so ausgeführt, daß sie entweder galvanisch oder kapazitiv mit dem strömenden Medium gekoppelt sind. Ein besonderes Merkmal der magnetisch-induktiven Durchflußmeßgeräte ist die Proportionalität zwischen der Meßspannung und der über den Querschnitt des Rohres gemittelten Strömungsgeschwindigkeit des Mediums, das heißt zwischen Meßspannung und Volumenstrom.

Das Magnetfeld eines magnetisch-induktiven Durchflußmeßgeräts wird dadurch erzeugt, daß die beiden Magnetspulen mit einem Erregerstrom versorgt werden- Dabei können Störungen des Meßsignals aufgrund eines nicht idealen Erregerstroms sowie durch Effekte in dem strömenden Medium selbst entstehen. Letztere haben ihre Ursache z. B. in elektrochemischen Störungen, die durch Reaktionen zwischen den Elektroden und dem strömenden Medium entstehen. Typisch sind in einem solchen Fall niederfrequente Störungen, die sich mit dem Meßsignal überlagern. Bei herkömmlichen magnetisch-induktiven Durchflußmeßgeräten, die kontinuierlich arbeiten, das heißt deren Erregerstrom für die Magnetspulen alternierend positiv bzw, negativ ist ohne Pausen zwischen den positiven bzw. negativen Halbperioden, lassen sich solche niederfrequenten Störungen auf dem Meßsignal dadurch kompensieren, daß ein einfaches Filter eingesetzt wird, mit welchem eine dem Meßsignal überlagerte lineare Drift unterdrückt werden kann.

Um z. B. einen Batteriebetrieb eines magnetisch-induktiven Durchflußmessers zu ermöglichen, kann es gewünscht sein, den Energieverbrauch des gesamten magnetisch-induktiven Durchflußmessers zu verringern. Der größte Anteil der Energie wird dabei in den Feldspulen zur Erzeugung des Magnetfeldes verbraucht. Unter Berücksichtigung dieser Tatsache ist in der US - A - 4,766,770 und in der US 5,625,155 eine lückende Erregung der das Magnetfeld erzeugenden Feldspulen vorgeschlagen worden. Der Erregerstrom und somit auch das Meßsignal bestehen dabei aus Zyklen aus einer positiven und einer negativen Halbperiode, wobei diese einzelnen Zyklen voneinander durch Bereiche getrennt sind, in denen keine Erregung erfolgt. Ein Meßwert kann dabei nur nach einem vollständigen Zyklus abgegeben werden, da jeder Meßwert aus mindestens zwei Halbperioden bestehen muß. Die letzte Halbperiode eines Zyklus ist jedoch von der ersten Halbperiode des darauffolgenden Zyklus aufgrund des dazwischenliegenden erregungsfreien Bereichs zu weit entfernt, als daß ein Meßsignal aus diesen beiden Halbperioden berechnet werden könnte.

Als den beiden Halbperioden eines Meßzeitraums zugeordneter Meßwert wird der Wert bestimmt, der der von dem Meßsignal gegenüber der Nullinie eingeschlossenen Fläche entspricht. Dabei ist die Wahl der Nullinie relativ zum Meßsignal nicht kritisch, wenn jedenfalls die von der positiven Halbperiode eingeschlossene Fläche positiv gerechnet wird und die von der negativen Halbperiode eingeschlossene Fläche negativ gerechnet wird. Der Einfachheit halber wird dabei, wie auch im folgenden, von einer linear verlaufenden Störung ausgegangen, die den im tatsächlichen Meßbetrieb auftretenden Störungen wenigstens in erster Näherung entspricht. Bei solchen dem Meßsignal überlagerten linearen Störungen kommt es jedoch bei der Bestimmung des Meßwerts zu folgenden Problemen:

Bei einem Signal mit einer Störung mit negativer Steigung sind die Flächenwerte unter der Meßsignalkurve etwas größer als im Falle eines ungestörten Signals. Gerade umgekehrt verhält es sich im Falle eines Signals, dem eine Störung mit positiver Steigung überlagert ist. In diesem Fall ist jede von einer Halbperiode eingeschlossene Fläche jeweils um einen gewissen Wert zu klein.

Die US 4,210,022 begegnet dem Problem überlagerter Störsignale, indem vor jedem Messzeitraum das Messsignal zu Null geregelt wird, wodurch zwar die fortwährende Akkumulation einer Fehlerspannung vermieden wird, Fehlereinflüsse in dem Messzeittaum selbst können jedoch nicht korrigiert werden; darüber hinaus ist schaltungstechnischer Aufwand zu betreiben.

Es ist die Aufgabe der Erfindung, ein magnetisch-induktives Durchflußmeßverfahren anzugeben, das einerseits energiesparend ist und andererseits auch bei mit einer Störung überlagerten Meßsignalen eine einfache und genaue Bestimmung des Meßsignals ermöglicht.

Erfindungsgemäß ist die zuvor hergeleitete und aufgezeigte Aufgabe durch das Verfahren gemäss Anspruch 1 gelöst,

In der Zeichnung zeigen

Fig. 1a   schematisch, eine volle Periode eines ungestörten Signals,

Fig. 1b   schematisch, eine Fehlerbetrachtung bei einer vollen Periode eines Si- gnals mit einer Störung mit negativer Steigung,

Fig. 1c   schematisch, eine Fehlerbetrachtung bei einer vollen Periode eines Si- gnals mit einer Störung mit positiver Steigung,

Fig. 2   schematisch, ein gestörtes Signal bei lückendem Betrieb und zusätzlicher Messung vor bzw. nach den einzelnen Melizeiträumen ge- mäß einem Ausführungsbeispiel der Erfin- dung, und

Fig. 3   schematisch, eine Fehlbetrachtung bei einer vollen Periode eines Signals mit einer Störung mit negativer Steigung und zusätzlicher Messung vor bzw. nach dem Erregungszeitraum.

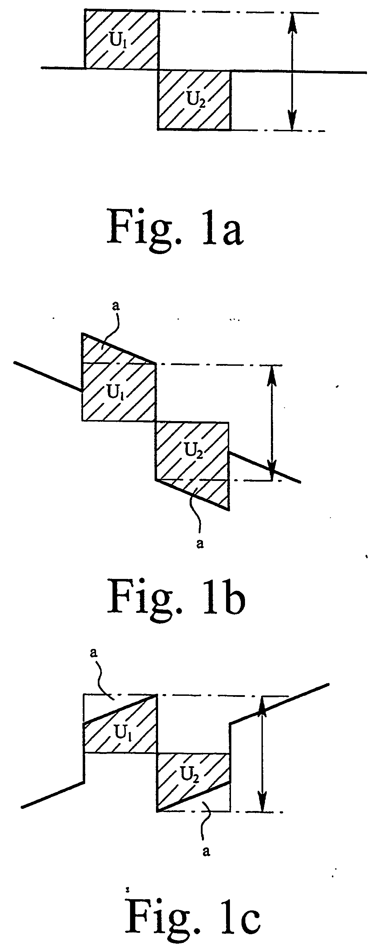

Aus Fig. 1a ist ein Meßsignal ersichtlich, das man bei lückendem Betrieb des magnetisch-induktiven Durchflußmeßgeräts und genau einer positiven Erregung und genau einer negativen Erregung pro Meßzeitraum erhält. Der dem Meßzeitraum zugeordnete Meßwert entspricht der Fläche, die von dem Meßsignal gegenüber der Nullinie eingeschlossen ist. Dabei ist die Wahl der Lage der Nullinie frei; vorliegend ist die Nullinie so gewählt worden, daß sie genau zwischen dem maximalen positiven Meßsignal und dem maximalen negativen Meßsignal liegt Der dem Meßzeitraum zugeordnete Meßwert W ergibt sich also aus der Summe der Beträge der Flächenintegrale der einzelnen Halbperioden des Meßsignals, vorliegend also

$$W = U_1 - U_2.$$

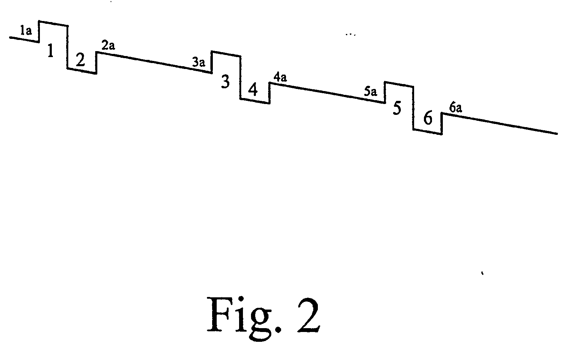

Wird der einem Meßzeitraum zugeordnete Meßwert auf diese Weise bestimmt, so ergeben sich jedoch Meßfehler, wenn das Meßsignal von einem Störsignal überlagert ist. Entsprechende Fehlerbetrachtungen sind in den Fig. 1b und 1c dargestellt, wobei exemplarisch der Einfachheit halber linear verlaufende Störungen gewählt worden sind, die entweder fallen oder steigern Wie aus Fig. lb ersichtlich, ergibt sich im Falle eines linear fallenden Störsignals, das dem Meßsignal überlagert ist, ein um den doppelten Wert von a zu großer Meßwert. Im Gegensatz dazu ergibt sich, wie aus Fig. 1c ersichtlich, wenn das Meßsignal von einem linear steigenden Störsignal überlagert ist, ein um den doppelten Wert von a zu geringer Meßwert. Um dieses Problem zu eliminieren, wird gemäß einem aus Fig. 2 ersichtlichen Ausführungsbeispiel der Erfindung der einem Meßzeitraum zugeordnete Meßwert derart bestimmt, daß ein Meßzeitraum neben den beiden Halbperioden 1 und 2 zusätzlich einen Bereich 1a vor der ersten Halbperiode des Magnetfeldes und einen Bereich 2a nach der letzten Halbperiode des Magnetfeldes umfaßt. Im Bereich 1a als auch im Bereich 2a wird das Meßsignal jeweils während eines der Dauer einer Halbperiode entsprechenden Zeitraums aufinte- griert, was zu Teilmeßwerten $U_{1a}$ bzw. $U_{2a}$ führt. Der einem jeweiligen Meßzeitraum zugeordnete Meßwert W wird dann nach der Gleichung

$$W = U_1 - U_2 - 1/3 \, (U_{1a} - U_{2a})$$

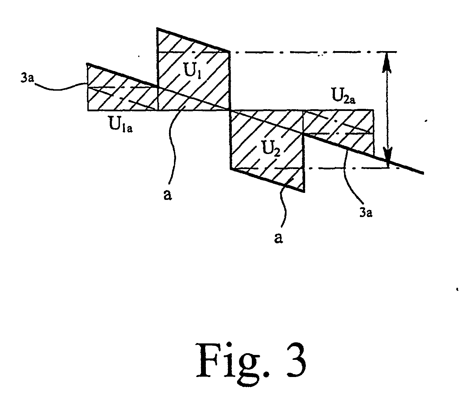

berechnet. Dabei ergibt sich für den einem Meßzeitraum zugeordneten Meßwert im Falle einer rein linearen Störung eine vollständige Eliminierung des Störsignals, wie schematisch aus Fig. 3 ersichtlich. Die Teilmeßwerte $U_1$ und $U_2$ werden jeweils um den Betrag a zu groß gemes- sen, während die Teilmeßwerte $U_{1a}$ und $U_{2a}$ vor der er- sten Halbperiode bzw. nach der zweiten Halbperiode jeweils genau 3a. betragen. Unter Kenntnis dieser Tatsache können somit gemäß dem ersten Ausfuhrungsbeispiel der Erfindung die außerhalb des eigentlichen Erre- gungszeitraums gemessenen Werte $U_{1a}$ und $U_{2a}$ ver- wendet werden, um das gestörte Meßsignal entsprechend zu korrigieren.

**Patentansprüche**

1.   Magnetisch-induktives Durchflußmeßverfahren für strömende Medien, bei dem die Erregung der das Magnetfeld erzeugenden Feldspulen lückend erfolgt und die Meßzeiträume jeweils eine positive Halbperiode des Magnetfeldes und eine negative Halbperiode des Magnetfeldes umfassen,
**dadurch gekennzeichnet,**
**daß** die Meßzeiträume zusätzlich jeweils einen Bereich vor der ersten Halbperiode des Magnetfeldes und einen Bereich nach der letzten Halbperiode des Magnetfeldes umfassen und die dort gemessenen Zusatzsignale verwendet werden, um ein dem Meßsignal überlagertes Störsignal zu bestimmen und das Meßsignal entsprechend zu korrigieren, indem die Meßzeiträume jeweils sowohl aus genau einer positiven Halbperiode des Magnetfeldes und genau einer negativen Halbperiode des Magnetfeldes als auch dem Bereich vor des ersten Halbperiode des Magnetfelds und dem Bereich nach der letzten Halbperiode des Magnetfelds bestehen, das Meßsignal während der positiven Halbperiode des Magnetfeldes und während der negativen Halbperiode des Magnetfeldes aufintegriert wird, was zu Teil- meßwerten $U_1$ bzw. $U_2$ führt, das Messsignal wäh- rend des der Dauer einer Halbperiode entsprechenden Zeitraums des Bereiches direkt vor der ersten Halbperiode des Magnetfeldes und des der Dauer einer Halbperiode entsprechenden Zeitraums des Bereiches direkt nach der letzten Halbperiode des Magnetfeldes aufintegriert wird, was zu den Teilmeßwerten $V_{1a}$ bzw. $U_{2a}$ führt, und der einem jeweiligen Meßzeitraum zugeordnete Meßwert W nach der Gleichung

$$W = U_1 - U_2 - 1/3\,(U_{1a} - U_{2a})$$

berechnet wird,

## Claims

1. Magneto-inductive flow-measuring method for flowing media, in which the excitation of the field coils generating the magnetic field occurs in a gapped manner and each measuring period includes a positive half-cycle of the magnetic field and a negative half-cycle of the magnetic field,
characterize in
that the measuring periods additionally encompass a section preceding the first half-cycle of the magnetic field and a section after the last half-cycle of the magnetic field and the additional signals measured there are used for quantifying an interference signal superposed over the measuring signal and for correcting the measuring signal accordingly, in that each measuring period consists of exactly one positive half-cycle of the magnetic field and exactly one negative half-cycle of the magnetic field as well as of the section preceding the first half-cycle of the magnetic field and the section after the last half-cycle of the magnetic field, during the positive half-cycle of the magnetic field and during the negative half-cycle of the magnetic field, the measuring signal is upslope integrated, so as to produce measured sub-values $U_1$ and $U_2$, respectively, that during a time span corresponding to the duration of a half-cycle, the measuring signal is upslope integrated immediately before the first half-cycle of the magnetic field and during a time span corresponding to the duration of a half-cycle, the measuring signal is upslope integrated immediately following the last half-cycle of the magnetic field so as to produce the measured sub-values $U_{1a}$ and $U_{2a}$, and the measured value W associated with a given measuring period is calculated according to the equation

$$W = U_1 - U_2 - 1/3(U_{1a} - U_{2a}).$$

## Revendications

1. Procédé de mesure par induction magnétique du débit de fluides en écoulement, dans lequel l'excitation des bobines de champ qui forment le champ magnétique s'effectue par intermittence et les intervalles de mesure comprennent tous une demi-période positive du champ magnétique et une demi-période négative du champ magnétique,
**caractérisé en ce que**
les intervalles de mesure comprennent de plus chacun une partie qui précède la première demi-période du champ magnétique et une partie qui suit la dernière demi-période du champ magnétique,
**en ce que** les signaux supplémentaires mesurés en ces emplacements sont utilisés pour déterminer un signal perturbateur qui se superpose au signal de mesure et pour corriger de manière appropriée le signal de mesure par le fait que les intervalles de mesure sont tous constitués exactement d'une demi-période positive du champ magnétique et d'exactement une demi-période négative du champ magnétique ainsi que de la partie qui précède la première demi-période du champ magnétique et de la partie qui suit la dernière demi-période du champ magnétique,
**en ce que** le signal de mesure est intégré pendant la demi-période positive du champ magnétique et pendant la demi-période négative du champ magnétique, ce qui fournit des valeurs partielles de mesure $U_1$ et $U_2$,
**en ce que** le signal de mesure est intégré pendant la durée qui correspond à la durée d'une demi-période de la partie qui précède directement la première demi-période du champ magnétique et pendant la durée qui correspond à la durée d'une demi-période de la partie qui suit directement la dernière demi-période du champ magnétique, ce qui fournit des valeurs partielles de mesure $U_{1a}$ et $U_{2a}$, et
**en ce que** la valeur de mesure W associée à chaque intervalle de mesure est calculée à partir de l'équation :

$$W = U_1 - U_2 - 1/3(U_{1a} - U_{2a}).$$

Fig. 1a

Fig. 1b

Fig. 1c

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4766770 A
- US 5625155 A
- US 4210022 A